# EUROPEAN PATENT APPLICATION

(11) **EP 4 496 042 A1**
(43) Date of publication of application: **22.01.2025**
(21) Application number: 23824255.6
(22) Date of filing: 15.06.2023
(51) Int. Cl.: H01M 4/66, H01M 10/058, H01M 4/13, H01M 10/052, H01M 4/02

(54) **ANODE CURRENT COLLECTOR FOR ANODE-FREE BATTERY, AND ANODE-FREE BATTERY COMPRISING SAME**

(30) Priority: 15.06.2022 KR 20220073087
(71) Applicant: LG Energy Solution, Ltd., Seoul 07335 (KR)
(72) Inventor: JEON, Boo Sik, Daejeon 34122 (KR); JO, Mi Ru, Daejeon 34122 (KR); SHIN, Hwan Ho, Daejeon 34122 (KR); PARK, Sung Bin, Daejeon 34122 (KR); PARK, Seung Hark, Daejeon 34122 (KR)
(74) Representative: Hoffmann Eitle
(86) International application number: PCT/KR2023/008306
(87) International publication number: WO 2023/244042

(57) **Abstract**

The present invention relates a negative electrode current collector for a negative electrode-free battery which includes a metal current collecting substrate; and a conductive layer disposed on the metal current collecting substrate, wherein the conductive layer includes an ion conductive polymer, and the ion conductive polymer includes a vinylidene fluoride-derived unit and a unit derived from at least one monomer selected from the group consisting of hexafluoropropylene and chlorotrifluoroethylene, wherein a main peak is present in a 2-theta range of 20.5° to 20.9° during X-ray diffraction analysis of the conductive layer.

## Description

### TECHNICAL FIELD

### [Cross-reference to Related Applications]

This application claims priority from Korean Patent Application No. 10-2022-0073087, filed on June 15, 2022, the disclosure of which is incorporated by reference herein.

### [Technical Field]

The present invention relates to a negative electrode current collector for a negative electrode-free battery and the negative electrode-free battery including the same.

### BACKGROUND ART

There is a need to develop battery technology for efficiently storing and utilizing electrical energy as personal IT devices and computer networks are developed with the recent development of information society and the accompanying dependency of society as a whole on the electrical energy is increased.

Particularly, studies of electricity storage devices, such as electric double-layer capacitors and lithium ion batteries, have been extensively conducted as an interest in solving environmental problems and realizing a sustainable circular society emerges. Among them, a lithium secondary battery is in the spotlight as a battery system with the highest theoretical energy density among battery technologies.

The lithium secondary battery generally has a structure in which an electrolyte solution is impregnated in an electrode assembly that is composed of a positive electrode, a negative electrode, and a separator. Also, in general, the positive electrode is generally prepared by coating an aluminum foil with a positive electrode material mixture including a positive electrode active material, and the negative electrode is prepared by coating a copper foil with a negative electrode material mixture including a negative electrode active material. In this case, a lithium transition metal oxide is generally used as the positive electrode active material, and a carbon-based active material or a silicon-based active material is used as the negative electrode active material.

Recently, a lithium metal battery using lithium metal itself as a negative electrode active material has been commercialized, and, furthermore, a negative electrode-free battery or anode-free battery is being studied in which only a negative electrode current collector is used as a negative electrode when preparing the electrode, but lithium is provided from the positive electrode by charging such that the lithium metal is used as a negative electrode active material. Since the negative electrode-free battery does not include a negative electrode material mixture layer, it may include more positive electrode material mixture layer, and thus, it is desirable in terms of high energy density.

However, during the charging of the negative electrode-free battery, there is a risk that the lithium transferred from the positive electrode is electroplated on the negative electrode current collector and then forms lithium dendrites. The negative electrode-free battery may have a problem that charge and discharge efficiency is reduced due to an increase in irreversible capacity which is caused by growth of these lithium dendrites. Also, since a lithium metal layer formed on the negative electrode current collector during the charging of the negative electrode-free battery has low electroplating density, it may cause an electrolyte solution side reaction, and thus, a rapid degradation of life performance may occur.

Korean Patent Application Laid-open Publication No. 10-2019-0083878 discloses a negative electrode-free lithium metal battery, but did not suggest an alternative to the above-described problem.

### [Prior Art Document]

### [Patent Document]

Korean Patent Application Laid-open Publication No. 10-2019-0083878

### DISCLOSURE OF THE INVENTION

### TECHNICAL PROBLEM

An aspect of the present invention provides a negative electrode current collector for a negative electrode-free battery in which charge and discharge efficiency and life performance are improved by suppressing formation of lithium dendrites during charge and discharge of the negative electrode-free battery including the negative electrode current collector for a negative electrode-free battery and improving electrolyte solution impregnability and ionic conductivity.

Another aspect of the present invention provides a negative electrode-free battery including the above-described negative electrode current collector for a negative electrode-free battery.

### TECHNICAL SOLUTION

According to an aspect of the present invention, there is provided a negative electrode current collector for a negative electrode-free battery which includes: a metal current collecting substrate; and a conductive layer disposed on the metal current collecting substrate, wherein the conductive layer includes an ion conductive polymer, and the ion conductive polymer includes a vinylidene fluoride-derived unit and a unit derived from at least one monomer selected from the group consisting of hexafluoropropylene and chlorotrifluoroethylene, wherein a main peak is present in a 2-theta range of 20.5° to 20.9° during X-ray diffraction analysis of the conductive layer.

According to another aspect of the present invention, there is provided a negative electrode-free battery including: the above-described negative electrode current collector for a negative electrode-free battery; a positive electrode facing the negative electrode current collector for a negative electrode-free battery; a separator disposed between the negative electrode current collector for a negative electrode-free battery and the positive electrode; and an electrolyte, wherein the conductive layer is disposed to face the separator.

### ADVANTAGEOUS EFFECTS

A negative electrode current collector for a negative electrode-free battery according to the present invention is characterized in that it includes a conductive layer including an ion conductive polymer which includes a vinylidene fluoride-derived unit and a unit derived from at least one monomer selected from the group consisting of hexafluoropropylene and chlorotrifluoroethylene, wherein a main peak is present in a 2-theta range of 20.5° to 20.9° during X-ray diffraction analysis of the conductive layer. Crystallization may be adjusted to a desired level through the 2-theta range during the X-ray diffraction analysis of the conductive layer, piezoelectric properties may be improved, and, accordingly, formation of lithium dendrites may be effectively suppressed according to the piezoelectric properties of the conductive layer during lithium plating. The ion conductive polymer included in the conductive layer includes the vinylidene fluoride-derived unit and the unit derived from at least one monomer selected from the group consisting of hexafluoropropylene and chlorotrifluoroethylene in the polymer at the same time, and, particularly, the hexafluoropropylene and/or chlorotrifluoroethylene-derived unit improves lithium ion conductivity by improving electrolyte solution impregnability of the conductive layer and may effectively accommodate a volume change during lithium electroplating and detachment by improving flexibility of the conductive layer.

Thus, a negative electrode-free battery including the above-described negative electrode current collector for a negative electrode-free battery may have high energy density as a whole as a separate negative electrode active material layer is not formed, may ensure safety by suppressing the formation of the lithium dendrites which is a problem in the negative electrode-free battery, may improve the lithium ion conductivity, and, as a result, may exhibit excellent charge and discharge efficiency and life performance because lithium from a positive electrode may be effectively electroplated on and detached from a negative electrode.

### BRIEF DESCRIPTION OF THE DRAWINGS

FIG. 1 is an X-ray diffraction analysis result of a conductive layer included in a negative electrode current collector for a negative electrode-free battery of Example 1.
FIG. 2 is an X-ray diffraction analysis result of a conductive layer included in a negative electrode current collector for a negative electrode-free battery of Comparative Example 1.
FIG. 3 is a life performance evaluation graph of negative electrode-free batteries of Examples 1 to 5 and Comparative Examples 1 and 2.

### MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Also, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, an average particle diameter (D₅₀) may be defined as a particle diameter at a cumulative volume of 50% in a particle diameter distribution curve. The average particle diameter (D₅₀), for example, may be measured by using a laser diffraction method. The laser diffraction method may generally measure a particle diameter ranging from submicrons to a few mm and may obtain highly repeatable and high-resolution results.

### Negative Electrode Current Collector for Negative Electrode-Free Battery

The present invention provides a negative electrode current collector for a negative electrode-free battery. Specifically, the negative electrode current collector for a negative electrode-free battery may be a negative electrode current collector for a negative electrode-free lithium secondary battery.

Specifically, as the negative electrode current collector for a negative electrode-free battery, the negative electrode current collector is characterized in that it includes a metal current collecting substrate; and a conductive layer disposed on the metal current collecting substrate, wherein the conductive layer includes an ion conductive polymer, and the ion conductive polymer includes a vinylidene fluoride-derived unit and a unit derived from at least one monomer selected from the group consisting of hexafluoropropylene and chlorotrifluoroethylene, wherein a main peak is present in a 2-theta range of 20.5° to 20.9° during X-ray diffraction analysis of the conductive layer.

The metal current collecting substrate is not particularly limited as long as it has high conductivity without causing adverse chemical changes in the battery. Specifically, the metal current collecting substrate may include at least one selected from the group consisting of copper, stainless steel, aluminum, nickel, titanium, and an aluminum-cadmium alloy, and may specifically include copper.

The metal current collecting substrate may have a thickness of 3 um to 500 µm, and may specifically have a thickness of 3 µm to 20 µm in consideration of both high energy density and mechanical strength.

The metal current collecting substrate may be used in various shapes such as that of a film, a sheet, a foil, a net, a porous body, a foam body, a non-woven fabric body, and the like.

An uneven structure may be formed on a surface of the metal current collecting substrate. The uneven structure may allow plating of lithium to be performed more smoothly during charge and discharge of a negative electrode-free battery including the negative electrode current collector for a negative electrode-free battery.

The conductive layer is disposed on the metal current collecting substrate. Specifically, the conductive layer may be disposed on at least one surface of the metal current collecting substrate, specifically, one surface or both surfaces of the metal current collecting substrate.

The conductive layer includes the ion conductive polymer. The ion conductive polymer includes a vinylidene fluoride (VdF)-derived unit and a unit derived from at least one monomer selected from the group consisting of hexafluoropropylene (HFP) and chlorotrifluoroethylene (CTFE).

In general, with respect to a polymer (specifically, PVdF) including only a vinylidene fluoride-derived unit, since it has piezoelectric properties, it has ionic conductivity above a certain level, but there are problems in terms of showing poor performance in electrolyte solution impregnability and showing inferior performance in flexibility. Particularly, in a negative electrode for a negative electrode-free battery, in a case in which impregnation of an electrolyte solution is not sufficiently preformed, since mobility of lithium ions may not be sufficiently secured, formation of lithium dendrites is promoted and there is a risk of significantly degrading life performance. Also, in a case in which the flexibility of the conductive layer is reduced, since a volume change during electroplating of lithium from a positive electrode may not be easily accommodated, there is a problem in that smooth charge and discharge efficiency may not be exhibited.

In order to solve these problems, the conductive layer according to the present invention includes the ion conductive polymer which includes a vinylidene fluoride-derived unit and a unit derived from at least one monomer selected from the group consisting of hexafluoropropylene and chlorotrifluoroethylene. In a case in which the unit derived from at least one monomer selected from the group consisting of hexafluoropropylene and chlorotrifluoroethylene is included in the ion conductive polymer, since the conductive layer improves the mobility of the lithium ions by increasing the electrolyte solution impregnability while not impairing the ionic conductivity according to the piezoelectric properties of the vinylidene fluoride-derived unit, prevents the formation of the lithium dendrites to a significant level, and easily accommodates the volume change due to the plating of lithium, a negative electrode for a negative electrode-free battery, which has high charge and discharge performance and life performance, may be achieved.

Specifically, the ion conductive polymer may be a vinylidene fluoride-hexafluoropropylene copolymer, a vinylidene fluoride-chlorotrifluoroethylene copolymer, or a vinylidene fluoride-hexafluoropropylene-chlorotrifluoroethylene copolymer.

Also, the ion conductive polymer may include the unit derived from at least one monomer selected from the group consisting of hexafluoropropylene and chlorotrifluoroethylene in an amount of 1 wt% to 30 wt%, particularly 3 wt% to 25 wt%, more particularly 5 wt% to 20 wt%, and even more particularly 12 wt% to 18 wt%. When the amount of the unit is within the above range, it is desirable in that it may exhibit high electrolyte solution impregnability without impairing the piezoelectric properties due to the vinylidene fluoride-derived unit and the resulting ionic conductivity.

Furthermore, a main peak is present in a 2-theta (2Θ) range of 20.5° to 20.9° during X-ray diffraction analysis of the conductive layer. In general, PVdF has a crystal structure, and is known as a material having piezoelectric properties. In this case, the piezoelectric property is defined as a mutual conversion action in which mechanical vibration energy and electrical energy may be converted to each other, and, accordingly, the material having piezoelectric properties may generate a voltage when a pressure is applied and may generate mechanical deformation when an electric field is applied. The piezoelectric properties of the PVdF are due to polarities of cross-polymerized CH₂ group and CF₂ group in the PVdF. In the PVdF, an alpha phase, a beta phase, a gamma phase, or a delta phase exists depending on a steric structure. A C-F bond in the PVdF has strong polarity due to high electronegativity of fluorine (F), wherein, with respect to the alpha phase, since VdF monomers in the PVdF are aligned in opposite directions to each other to cancel dipole moments, the piezoelectric properties are absent or not large, and, with respect to the beta phase, since the VdF monomers in the PVdF may be aligned in the same direction to maximize the dipole moment, it is understood that the piezoelectric properties are relatively excellent.

In this case, that the main peak is present in a 2-theta (2θ) range of 20.5° to 20.9° during X-ray diffraction analysis of the conductive layer may mean that, in the vinylidene fluoride-derived units included in the ion conductive polymer or in the polymer including the same, the beta phase of the vinylidene fluoride-derived unit exists as a dominant phase in comparison to other phases. With respect to the conductive layer according to the present invention which includes the vinylidene fluoride-derived unit containing the beta phase as a main component and is achieved to have low crystallinity, it may be understood that it has relatively stronger dipole moment and better piezoelectric properties than a conductive layer that includes a vinylidene fluoride-derived unit containing the alpha phase as a main component. In contrast, in a case in which the alpha phase of the PVdF exists as a dominant phase in comparison to the other phases, a main peak exists in a 2-theta (2Θ) range of approximately 20.0° during X-ray diffraction analysis. In a case in which the PVdF included in the conductive layer contains the alpha phase as the main component, since the crystallinity is high, the electrolyte solution impregnability and the ionic conductivity are not only reduced, but the piezoelectric properties are also reduced, and thus, precipitation of the lithium dendrites may not be sufficiently prevented.

Thus, since the conductive layer included in the negative electrode current collector for a negative electrode-free battery according to the present invention includes the ion conductive polymer including the unit derived from at least one monomer selected from the group consisting of hexafluoropropylene and chlorotrifluoroethylene together with the vinylidene fluoride-derived unit and the main peak is present in a 2-theta (2θ) range of 20.5° to 20.9° during X-ray diffraction analysis, it may improve the mobility of the lithium ions, may prevent the formation of the lithium dendrites to a significant level, and may achieve a negative electrode for a negative electrode-free battery which has high life performance. The 2-theta range during the X-ray diffraction analysis of the conductive layer is controlled by an arrangement structure of the vinylidene fluoride unit, but, since the conductive layer, which includes only PVdF containing only the vinylidene fluoride unit, not only exhibits the piezoelectric properties, but the flexibility is also very low, it may not accommodate the volume change due to the electroplating of lithium, and, as a result, there is a concern that the formation of the lithium dendrites is promoted. In this respect, the conductive layer according to the present invention may even exhibit an effect of improving the flexibility of the conductive layer by including the hexafluoropropylene and/or chlorotrifluoroethylene-derived units in the ion conductive polymer while adjusting the 2-theta (2Θ) range to a specific range during the X-ray diffraction analysis.

A 20 value at which the main peak appears during the X-ray diffraction analysis of the conductive layer is derived from the arrangement structure of the vinylidene fluoride-derived unit, but, even if the hexafluoropropylene or chlorotrifluoroethylene is copolymerized with the vinylidene fluoride, since a backbone structure of vinylidene fluoride and the arrangement structure of the vinylidene fluoride-derived unit in the copolymer are maintained, the above-described 20 value at which the main peak appears during the X-ray diffraction analysis of the conductive layer is not changed.

In the present specification, the expression "main peak" means a peak at which an intensity is the highest when a graph of 2-theta and the intensity is plotted using X-ray diffraction analysis.

The conductive layer may further include a lithium salt together with the ion conductive polymer. The lithium salt may contribute to formation of a solid electrolyte interface layer (SEI layer) on a surface of the negative electrode current collector during initial charge, and, accordingly, it may further improve the ionic conductivity of the conductive layer and may contribute to improving the life performance.

The lithium salt may include at least one selected from the group consisting of LiCl, LiBr, LiI, LiNO₃, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, (CF₃SO₂)₂NLi, (FSO₂)₂NLi, chloroborane lithium, lower aliphatic carboxylic acid lithium, lithium 4-phenyl borate, and lithium imide, and may specifically include LiNO₃ in terms of suppressing the formation of the lithium dendrite by promoting formation of a stable SEI layer with an increased amount of an inorganic material, such as Li₃N and Li₂O, on the surface of the negative electrode current collector and inducing a surface shape of the plated lithium metal during charge to be formed in a spherical shape.

In a case in which the lithium salt is included in the conductive layer, the lithium salt may be included in an amount of 0.1 wt% to 20 wt%, more specifically, 2 wt% to 10 wt% in the conductive layer. When the amount of the lithium salt is within the above range, it is desirable in that it prevents an increase in resistance when an excessive amount of the lithium salt is added while it forms a stable SEI layer, achieves an effect of preventing the formation of the lithium dendrites, and effectively compensates for a concentration gradient which is caused by consumption of lithium ions on the surface of the negative electrode current collector during charge and discharge.

The conductive layer may further include at least one additional polymer selected from the group consisting of acrylic polymer, polyurethane, polyurea, styrene-butadiene rubber, polyimide, and polystyrene in addition to the ion conductive polymer. The additional polymer may be included in the conductive layer in terms of improving the electrolyte solution impregnability by increasing a degree of swelling of the conductive layer. Even if the additional polymer is included in the conductive layer, since micro-separation occurs during drying for preparing the conductive layer, it does not have a significant effect on crystal formation of the vinylidene fluoride unit-containing polymer, and thus, the 20 value at which the main peak appears during the X-ray diffraction analysis of the conductive layer is not changed depending on whether the additional polymer is added or not.

The acrylic polymer may be a polymer which is polymerized from at least one monomer selected from butyl acrylate, acrylic acid, and acrylonitrile.

In a case in which the conductive layer further includes the additional polymer, a weight ratio of the ion conductive polymer to the additional polymer, which are included in the conductive layer, may be in a range of 10:90 to 99.9:0.1, specifically, 50:50 to 99.5:0.5. When the weight ratio is in the above range, it is desirable in terms of maintaining a shape of the conductive layer and increasing the impregnability of the electrolyte solution.

The conductive layer may have a thickness of 1 um to 50 µm, particularly 2 µm to 10 µm, and more particularly 2 um to 3 µm, and, when the thickness is in the above range, since an effect of suppressing the formation of the lithium dendrites and improving the electrolyte solution impregnability according to the use of the conductive layer may be achieved and a volume of the negative electrode current collector including the conductive layer may be reduced at the same time, energy density of a secondary battery may be improved.

The conductive layer may be prepared by applying a composition for forming a conductive layer, which includes the ion conductive polymer, to the metal current collecting substrate and drying the composition. In this case, it is important to properly control a drying temperature such that the beta phase in PVdF may become a dominant phase. If the drying temperature is excessively high, since crystallization proceeds excessively and an amount of the alpha phase of the PVdF is increased, it is difficult to achieve the conductive layer desired in the present invention.

Specifically, a method of preparing the conductive layer may include the following steps.
(a) applying a composition for forming a conductive layer, which includes the ion conductive polymer, to the metal current collecting substrate; and
(b) drying the applied composition for forming a conductive layer.

The composition for forming a conductive layer may further include a solvent together with the ion conductive polymer. The solvent, for example, may be N-methyl pyrrolidone (NMP) .

A drying temperature during the drying may be appropriately adjusted depending on a type of the polymer, and, for example, the drying temperature may be in a range of 95°C or lower, particularly 30°C to 75°C, and more particularly 40°C to 65°C. In this case, drying time may be in a range of 1 hour to 5 hours.

The drying, for example, may be performed under vacuum conditions.

After the drying, additional drying may be further performed after decreasing the temperature to room temperature (specifically 20°C to 25°C). The additional drying, for example, may be performed for 1 hour to 100 hours, specifically, 24 hours to 80 hours.

### Negative Electrode-Free Battery

Also, the present invention provides a negative electrode-free battery including the above-described negative electrode current collector for a negative electrode-free battery. The negative electrode-free battery may be a negative electrode-free lithium secondary battery.

Specifically, the negative electrode-free battery includes the above-described negative electrode current collector for a negative electrode-free battery; a positive electrode facing the negative electrode current collector for a negative electrode-free battery; a separator disposed between the negative electrode current collector for a negative electrode-free battery and the positive electrode; and an electrolyte. In this case, the conductive layer may be disposed to face the separator.

Characteristics of the negative electrode current collector for a negative electrode-free battery are as described above.

The negative electrode current collector for a negative electrode-free battery itself may be used as a negative electrode for a negative electrode-free battery.

The negative electrode for a negative electrode-free battery or the negative electrode current collector for a negative electrode-free battery does not include a separate lithium intercalation material or lithium metal, and may be assembled into an electrode assembly and a negative electrode-free battery together with the positive electrode and the separator. As will be described later, in the negative electrode-free battery including the negative electrode for a negative electrode-free battery or the negative electrode current collector for a negative electrode-free battery, lithium ions from the positive electrode may move to the negative electrode for a negative electrode-free battery or the negative electrode current collector for a negative electrode-free battery during charge to form a lithium metal layer. The negative electrode-free battery may be charged and discharged by forming or removing the lithium metal layer.

The positive electrode is disposed to face the negative electrode current collector for a negative electrode-free battery.

The positive electrode may include a positive electrode current collector, and a positive electrode active material layer formed on the positive electrode current collector.

The positive electrode current collector is not particularly limited as long as it has high conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode current collector may generally have a thickness of 3 µm to 500 µm.

The positive electrode active material layer is formed on the positive electrode current collector, and includes a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a m ixture of two or more thereof may be included. Among these materials, in terms of the improvement of capacity characteristics and stability of the battery, the lithium composite metal oxide may be LiCoO₂, LiMnO₂, LiNiO₂, lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂, etc.), or lithium nickel cobalt aluminum oxide (e.g., Li(Ni_{0.7}Co_{0.15}Al_{0.05})O₂, etc.).

The positive electrode active material may be included in an amount of 80 wt% to 99 wt% based on a total weight of the positive electrode active material layer.

The positive electrode active material layer may optionally further include at least one additive selected from the group consisting of a binder and a conductive material in addition to the above-described positive electrode active material.

The binder is a component that assists in binding between the conductive material and the active material and in binding with the current collector, wherein the binder is commonly added in an amount of 1 wt% to 30 wt% based on the total weight of the positive electrode active material layer. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, a fluoro rubber, and various copolymers.

Any conductive material may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon powder; metal powder such asaluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive material may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The conductive material may be included in an amount of 1 wt% to 30 wt% based on the total weight of the positive electrode active material layer.

After a positive electrode slurry is prepared by adding the positive electrode active material as well as optionally the additive including the binder and/or the conductive mater ial to a solvent, the positive electrode active material layer may be prepared by applying the positive electrode slurry on the positive electrode current collector and rolling and drying the coated positive electrode current collector.

The solvent may include an organic solvent, such as N-methyl-2-pyrrolidone (NMP), and may be used in an amount such that desirable viscosity is obtained when the positive electrode active material as well as optionally the binder and the conductive material are included. For example, the solvent may be included in an amount such that a concentration of a solid content including the positive electrode active material as well as optionally the binder and the conductive material is in a range of 50 wt% to 95 wt%, preferably, 70 wt% to 90 wt%.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

The negative electrode-free battery may further include a lithium metal layer which is formed on the negative electrode current collector for a negative electrode-free battery, wherein the lithium metal layer may be formed by movement of lithium ions from the positive electrode by charging the negative electrode-free battery. The lithium metal layer may specifically be formed or disposed between the metal current collecting substrate and the conductive layer.

As described above, the negative electrode-free battery according to the present invention is suitable for portable devices, such as mobile phones, notebook computers, and digital cameras, and electric cars such as hybrid electric vehicles (HEVs) and, particularly, may be preferably used as a constituent battery of a medium and large sized battery module. Thus, the present invention also provides a medium and large sized battery module including the above-described negative electrode-free battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1: Preparation of Negative Electrode Current Collector for Negative Electrode-Free Battery

A copper foil was prepared as a metal current collecting substrate (thickness: 15 µm).

A composition for forming a conductive layer (solid content: 10 wt%), in which a vinylidene fluoride-hexafluoropropylene copolymer (VdF-HFP Copolymer) containing 15 wt% of a hexafluoropropylene (HFP)-derived unit, as an ion conductive polymer, was dispersed in an N-methylpyrrolidone (NMP) solvent, was prepared, and the composition for forming a conductive layer was applied to the metal current collecting substrate, dried at 60°C for 2 hours under vacuum conditions (about -0.1 MPa), and then additionally dried for 70 hours by slowly decreasing the temperature to room temperature to form a conductive layer (thickness: 2.5 µm). The metal current collecting substrate having the conductive layer formed thereon was used as a negative electrode current collector for a negative electrode-free battery.

### Example 2: Preparation of Negative Electrode Current Collector for Negative Electrode-Free Battery

A negative electrode current collector for a negative electrode-free battery was prepared in the same manner as in Example 1 except that LiNO₃, as a lithium salt, was further included in a composition for forming a conductive layer in an amount of 5 wt% based on a weight of the solid content of the composition for forming a conductive layer.

A thickness of a conductive layer included in the negative electrode current collector for a negative electrode-free battery of Example 2 was 2.5 µm.

### Example 3: Preparation of Negative Electrode Current Collector for Negative Electrode-Free Battery

A negative electrode current collector for a negative electrode-free battery was prepared in the same manner as in Example 1 except that a VdF-HFP copolymer containing 5 wt% of the HFP-derived unit was used instead of the VdF-HFP copolymer containing 15 wt% of the HFP-derived unit.

A thickness of a conductive layer included in the negative electrode current collector for a negative electrode-free battery of Example 3 was 2.5 µm.

### Example 4: Preparation of Negative Electrode Current Collector for Negative Electrode-Free Battery

A negative electrode current collector for a negative electrode-free battery was prepared in the same manner as in Example 1 except that a VdF-HFP copolymer containing 20 wt% of the HFP-derived unit was used instead of the VdF-HFP copolymer containing 15 wt% of the HFP-derived unit.

A thickness of a conductive layer included in the negative electrode current collector for a negative electrode-free battery of Example 4 was 2.5 µm.

### Example 5: Preparation of Negative Electrode Current Collector for Negative Electrode-Free Battery

A negative electrode current collector for a negative electrode-free battery was prepared in the same manner as in Example 1 except that a VdF-CTFE copolymer containing 20 wt% of a chlorotrifluoroethylene (CTFE)-derived unit was used instead of the VdF-HFP copolymer containing 15 wt% of the HFP-derived unit.

A thickness of a conductive layer included in the negative electrode current collector for a negative electrode-free battery of Example 5 was 2.5 µm.

### Comparative Example 1: Preparation of Negative Electrode Current Collector for Negative Electrode-Free Battery

A negative electrode current collector for a negative electrode-free battery was prepared in the same manner as in Example 1 except that, when drying the composition for forming a conductive layer, the drying was performed at 100°C for 10 hours under vacuum conditions (about -0.1 MPa) and the additional drying was not performed.

A thickness of a conductive layer included in the negative electrode current collector for a negative electrode-free battery of Comparative Example 1 was 2.5 µm.

### Comparative Example 2: Preparation of Negative Electrode Current Collector for Negative Electrode-Free Battery

A negative electrode current collector for a negative electrode-free battery was prepared in the same manner as in Example 1 except that polyvinylidene fluoride (PVdF) was used instead of the VdF-HFP copolymer containing 15 wt% of the HFP-derived unit.

A thickness of a conductive layer included in the negative electrode current collector for a negative electrode-free battery of Comparative Example 2 was 2.5 µm.

### Experimental Example 1: X-Ray Diffraction Analysis

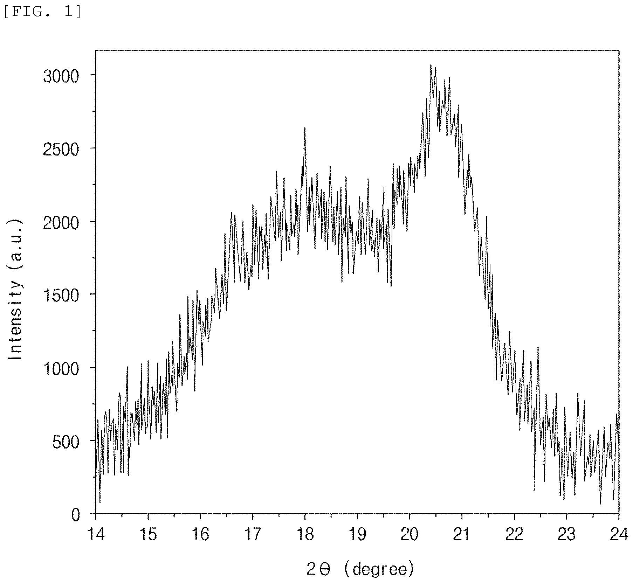

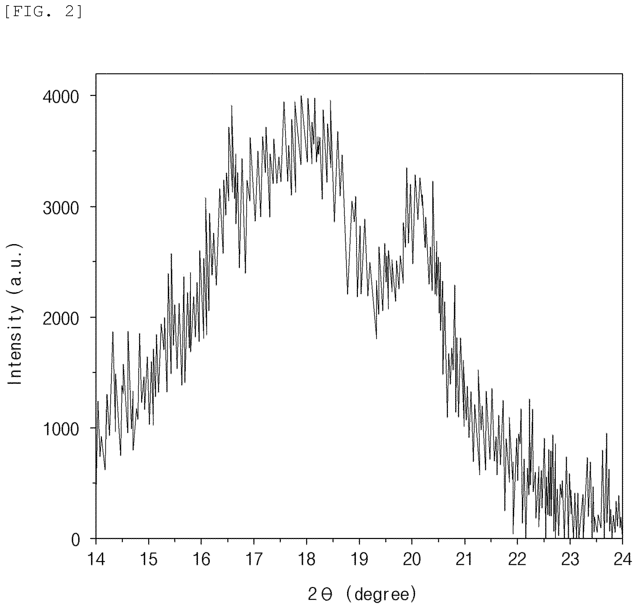

X-ray diffraction analysis of the conductive layers was performed for the negative electrode current collectors for a negative electrode-free battery which were prepared in Example 1 and Comparative Example 1. FIG. 1 and FIG. 2 illustrate results of the X-ray diffraction analysis of the conductive layers of Example 1 and Comparative Example 1, respectively.

### XRD analysis conditions are as follows.

1) Type and wavelength of light source: An X-ray wavelength generated from Cu Kα was used, and the wavelength (λ) of the light source was 0.15406 nm.
2) Sample preparation method: After cutting the conductive layer to a size of a cover glass, a sample was prepared by adhering the conductive layer to the cover glass using a double-sided tape. After attaching the prepared sample to a groove of a holder, a planarization operation was performed with a slide glass such that a height of the sample was constant.
3) XRD analysis equipment setting conditions: Fixed Divergence Slit (FDS) was set to 0.5, and an energy-dispersive 1D detector was used as a detector. A measurement mode was set to a linear mode, a measurement range was set to a 2θ range of 10° to 30°, and measurement conditions were set to perform a 2θ scan with 0.016° over 4 seconds.

Referring to FIG. 1, a main peak was observed at approximately 20.7° in the conductive layer of Example 1. Accordingly, it may be confirmed that a beta phase was a dominant phase in PVdF included in the conductive layer of Example 1.

In contrast, a main peak was observed at approximately 20.0° in the conductive layer of Comparative Example 1. Accordingly, it may be confirmed that an alpha phase was a dominant phase in PVdF included in the conductive layer of Example 1.

When FIG. 1 and FIG. 2 were compared with each other, it may be understood that a main peak intensity in the X-ray diffraction analysis result of Comparative Example 1 was higher than that of Example 1. This means that a degree of crystallinity of the conductive layer of Comparative Example 1 was higher than a degree of crystallinity of the conductive layer of Example 1.

Considering these points comprehensively, it may be understood that the conductive layer of Example 1 and the negative electrode current collector for a negative electrode-free battery including the same included the PVdF having relatively low crystallinity and the dominant beta phase.

### Experimental Example 2: Charge and Discharge Efficiency Evaluation

### <Preparation of Negative Electrode-Free Battery>

LiCoO₂ as a positive electrode active material; carbon black as a conductive material; and PVDF, as a binder, were mixed in an N-methylpyrrolidone solvent in a weight ratio of 96:2:2 to prepare a positive electrode slurry, and an aluminum current collector (thickness: 20 µm) was coated with the positive electrode slurry, then dried, and rolled to form a positive electrode active material layer (thickness: 130 µm), wherein this was used as a positive electrode.

An electrode assembly, which included the negative electrode current collector for a negative electrode-free battery according to Example 1, the positive electrode facing the negative electrode current collector, and a polyethylene separator disposed between the positive electrode and the negative electrode, was prepared, and, after the electrode assembly was accommodated in a battery case, an electrolyte was injected and the battery case was sealed to prepare a negative electrode-free battery.

One, in which ethylene carbonate (EC) and ethylmethyl carbonate (EMC) were mixed in a volume ratio of 2:8 as an organic solvent, 0.5 wt% of vinylene carbonate (VC), as an additive, was added based on a total weight of the electrolyte, and LiPF₆, as a lithium salt, was added at a concentration of 1.2 mol/L, was used as the electrolyte used in this case.

Negative electrode-free batteries of Examples 2 to 4 and Comparative Examples 1 and 2 were prepared in the same manner as in Example 1 except that the negative electrode current collectors for a negative electrode-free battery of Examples 2 to 5 and Comparative Examples 1 and 2 were used.

### <Capacity Retention Evaluation>

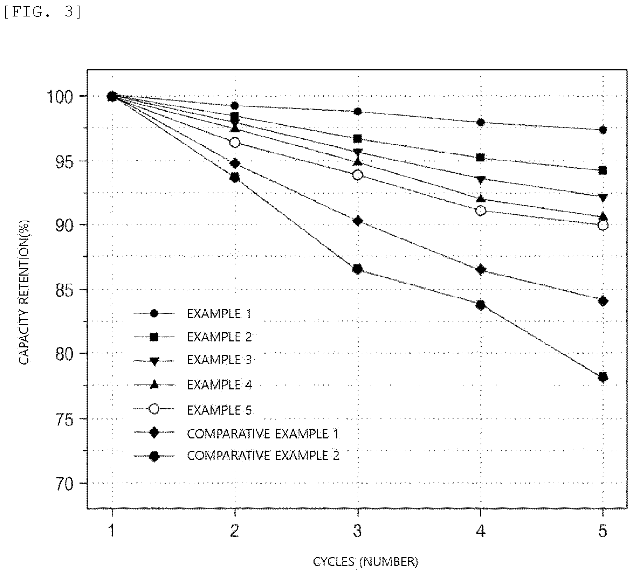

The above-prepared negative electrode-free batteries of the examples and the comparative examples were cycle charged and discharged at 25°C under the following conditions to evaluate capacity retentions. A graph of capacity retentions according to cycles is illustrated in FIG. 3, and capacity retentions at 5 cycles are presented in Table 1 below.

The capacity retention was evaluated by the following equation. Capacity retention(%)={ (discharge capacity of the negative electrode-free battery in an Nth cycle)/ (discharge capacity of the negative electrode-free battery in a 1st cycle)}×100
(In the above equation, N is an integer of 1 or more)

### * Charging and discharging conditions

Charging: CC/CV (constant current/constant voltage) mode; 0.1 C; 4.45 V, 1/20 C cut-off
Discharging: CC mode; 0.1 C; 3.0 V cut-off

**[Table 1]**

| | Capacity retention (%) |
|---|---|
| Example 1 | 94.2 |
| Example 2 | 97.4 |
| Example 3 | 90.6 |
| Example 4 | 92.2 |
| Example 5 | 89.9 |
| Comparative Example 1 | 78.1 |
| Comparative Example 2 | 84.1 |

Referring to Table 1 and FIG. 3, it may be understood that the negative electrode-free batteries according to the examples had better charge and discharge efficiencies than the negative electrode-free batteries according to the comparative examples.

## Claims

1. A negative electrode current collector for a negative electrode-free battery, the negative electrode current collector comprising:
a metal current collecting substrate; and
a conductive layer disposed on the metal current collecting substrate,
wherein the conductive layer comprises an ion conductive polymer, and
the ion conductive polymer comprises a vinylidene fluoride-derived unit and a unit derived from at least one monomer selected from the group consisting of hexafluoropropylene and chlorotrifluoroethylene,
wherein a main peak is present in a 2-theta range of 20.5° to 20.9° during X-ray diffraction analysis of the conductive layer.

2. The negative electrode current collector for the negative electrode-free battery of claim 1, wherein the unit derived from at least one monomer selected from the group consisting of hexafluoropropylene and chlorotrifluoroethylene is included in an amount of 1 wt% to 30 wt% in the ion conductive polymer.

3. The negative electrode current collector for the negative electrode-free battery of claim 1, wherein the conductive layer further comprises a lithium salt.

4. The negative electrode current collector for the negative electrode-free battery of claim 3, wherein the lithium salt comprises at least one selected from the group consisting of LiCl, LiBr, LiI, LiNO₃, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, (CF₃SO₂)₂NLi, (FSO₂)₂NLi, chloroborane lithium, lower aliphatic carboxylic acid lithium, lithium 4-phenyl borate, and lithium imide.

5. The negative electrode current collector for the negative electrode-free battery of claim 3, wherein the lithium salt comprises LiNO₃.

6. The negative electrode current collector for the negative electrode-free battery of claim 3, wherein the lithium salt is included in an amount of 0.1 wt% to 20 wt% in the conductive layer.

7. The negative electrode current collector for the negative electrode-free battery of claim 1, wherein the conductive layer has a thickness of 1 um to 50 µm.

8. The negative electrode current collector for the negative electrode-free battery of claim 1, wherein the metal current collecting substrate comprises at least one selected from the group consisting of copper, stainless steel, aluminum, nickel, titanium, and an aluminum-cadmium alloy.

9. The negative electrode current collector for the negative electrode-free battery of claim 1, wherein the metal current collecting substrate comprises copper.

10. A negative electrode-free battery comprising:
the negative electrode current collector for a negative electrode-free battery of claim 1;
a positive electrode facing the negative electrode current collector for the negative electrode-free battery;
a separator disposed between the negative electrode current collector for the negative electrode-free battery and the positive electrode; and
an electrolyte,
wherein the conductive layer is disposed to face the separator.

11. The negative electrode-free battery of claim 10, further comprising a lithium metal layer which is formed on the negative electrode current collector for the negative electrode-free battery,
wherein the lithium metal layer is formed by movement of lithium ions from the positive electrode by charging the negative electrode-free battery.
